# EUROPÄISCHE PATENTSCHRIFT

(11) **EP 1 971 786 B1**
(45) Veröffentlichungstag und Bekanntmachung des Hinweises auf die Patenterteilung: **09.12.2009**
(21) Anmeldenummer: 06807429.3
(22) Anmeldetag: 20.10.2006
(51) Int. Cl.: F16B 25/00, F16B 35/04

(54) **SELBSTLOCHENDE UND GEWINDEFORMENDE SCHRAUBE**
SELF-TAPPING AND THREAD-FORMING SCREW
VIS AUTOPERFORANTE ET TARAUDEUSE

(30) Priorität: 12.01.2006 DE 202006000479 U
(43) Veröffentlichungstag der Anmeldung: 24.09.2008
(73) Patentinhaber: SPAX International GmbH & Co. KG, 58256 Ennepetal (DE)
(72) Erfinder: LANGEWIESCHE, Frank, 45549 Sprockhövel (DE)
(74) Vertreter: Patentanwälte Dr. Solf & Zapf
(86) Internationale Anmeldenummer: PCT/EP2006/067610
(87) Internationale Veröffentlichungsnummer: WO 2007/087904

(56) Entgegenhaltungen:
- DE-U1- 29 811 536
- FR-A- 1 469 665
- US-A- 5 295 774

## Beschreibung

Die vorliegende Erfindung betrifft eine selbstlochende und gewindeformende Schraube, mit einem Schraubenschaft mit einer einendigen Schraubenspitze und einem anderendigen Kraftangriff zur Drehmomentübertragung, wobei der Schraubenschaft aus einem die Schraubenspitze aufweisenden Gewindeabschnitt und einem sich anschließenden gewindefreien, den Kraftangriff aufweisenden Schaftabschnitt besteht, und wobei der Gewindeabschnitt aus einem Schaftkern und einem gewindeformenden, ein- oder mehrgängigen Gewinde besteht.

Derartige Schrauben, die aufgrund ihres gewindefreien Schaftabschnittes auch als Teilgewinde-Schrauben bezeichnet werden, können ohne Vorbohren direkt in relativ weiche Materialien, wie Holz und dergleichen, eingeschraubt werden. Dabei ist in der Praxis festgestellt worden, dass der gewindefreie Schaftabschnitt bei Eintritt in das durch den Gewindeabschnitt geformte Gewindeloch eine hohe Reibung verursacht, die zu einem nachteilig hohen Einschraubdrehmoment führt.

Es ist bekannt, bei einer solchen Teilgewinde-Schraube den gewindefreien Schaftabschnitt in seinem an den Gewindeabschnitt angrenzenden Bereich mit einem sogenannten Schaftfräser zu versehen, der aus radial vorspringenden Fräsrippen besteht, die beim Einschrauben das Gewindeloch so aufweiten sollen, dass der Schaftabschnitt mit reduzierter Reibung und dadurch mit verringertem

Einschraubdrehmoment eindringen kann, siehe auch z.B. die Patentschrift US 5,295,774 A. Bei solchen Schrauben ist allerdings die Herstellung in einem Walzverfahren problematisch. Beim Walzen kann es im Bereich des Schaftfräsers zu einer Biegeverformung der Schraube kommen. Dies bedeutet, dass die Schraube nicht oder nur mit einem zusätzlichen Aufwand exakt geradlinig herstellbar ist.

Der vorliegenden Erfindung liegt die Aufgabe zugrunde, eine Schraube der genannten Art zu schaffen, die einerseits mit geringem Einschraubdrehmoment einschraubbar, andererseits aber auf einfache und wirtschaftliche Weise mit hoher Genauigkeit (insbesondere exakt geradlinig) herstellbar ist.

Erfindungsgemäß wird dies dadurch erreicht, dass der Gewindeabschnitt in einem von der Schraubenspitze entfernt liegenden Bereich einen Kernabschnitt mit einem polygonalen Kernquerschnitt aufweist, der mit seinen Ecken einen Hüllkreis mit einem Hüllkreis-Durchmesser definiert, der größer als der Schaft-Durchmesser des gewindefreien Schaftabschnittes ist. Dadurch wird erreicht, dass beim Einschrauben der polygonale Kernabschnitt mit seinen Ecken das Gewindeloch aufweitet, um nachfolgend beim Eindringen des gewindefreien Schaftabschnittes die Reibung und das Einschraubmoment zu reduzieren. Indem der polygonale Kernabschnitt erfindungsgemäß im Bereich des Gewindeabschnittes (und nicht etwa im Bereich des gewindefreien Schaftabschnittes) angeordnet ist, wird vorteilhafterweise bei der Herstellung der Schraube im Walzverfahren erreicht, dass die Schraube zwischen den Walzbacken über das Gewinde gerade auch im Bereich des polygonalen Kernabschnittes exakt geführt ("eingespannt") ist, so dass Verbiegungen aus der Schraubenachse ausgeschlossen sind. Die Erfindung ermöglicht somit eine einfache und schnelle Herstellung im Walzverfahren mit hoher Präzision.

Weitere vorteilhafte Ausgestaltungsmerkmale der Erfindung sind in den Unteransprüchen sowie in der folgenden Beschreibung enthalten.

Anhand von zwei in der Zeichnung veranschaulichten; bevorzugten Ausführungsbeispielen soll die Erfindung genauer erläutert werden. Dabei zeigen:
- Fig. 1: eine Seitenansicht einer erfindungsgemäßen Schraube in einer ersten, bevorzugten Ausführungsform,
- Fig. 2: einen vergrößerten Querschnitt in der Ebene II - II gemäß Fig. 1,
- Fig. 3: eine Seitenansicht einer zweiten Ausführungsform der erfindungsgemäßen Schraube und
- Fig. 4: einen vergrößerten Querschnitt in der Ebene IV - IV gemäß Fig. 3.

Eine erfindungsgemäße Schraube 1 besteht in beiden Ausführungsformen aus einem länglichen Schraubenschaft 2 mit einer einendigen Schraubenspitze 4 und einem anderendigen Kraftangriff 6 zur Drehmomentübertragung. In den dargestellten Ausführungen ist der Kraftangriff 6 als Innenkraftangriff ausgebildet und daher in den Seitenansichten eigentlich nicht erkennbar. Zudem ist der Kraftangriff 6 an bzw. in einem Schraubenkopf 8 gebildet, der bevorzugt als Senkkopf ausgeführt ist. Der Kraftangriff 6 kann als Kreuzschlitz, Innensechskant, Innenstern oder dergleichen ausgebildet sein. Es kann sich auch um einen Außenkraftangriff, z. B. Außensechskant, handeln.

Der Schraubenschaft 2 besteht aus einem die Schraubenspitze 4 aufweisenden Gewindeabschnitt 10 und einem sich anschließenden gewindefreien, den Kraftangriff 6 bzw. den Schraubenkopf 8 aufweisenden Schaftabschnitt 12. Der gewindefreie Schaftabschnitt 12 weist eine zylindrische Umfangsfläche mit einem Schaft-Durchmesser DS auf. Der Gewindeabschnitt 10 besteht aus einem Schaftkern 14 und einem gewindeformenden, wie dargestellt bevorzugt eingängigen Gewinde 16 in Form einer schraubenlinienförmig verlaufenden radialen Erhebung. Das Gewinde 16 definiert mit seiner äußeren, zwischen zwei Flanken gebildeten Gewindekante 18 einen äußeren Gewindedurchmesser DG.

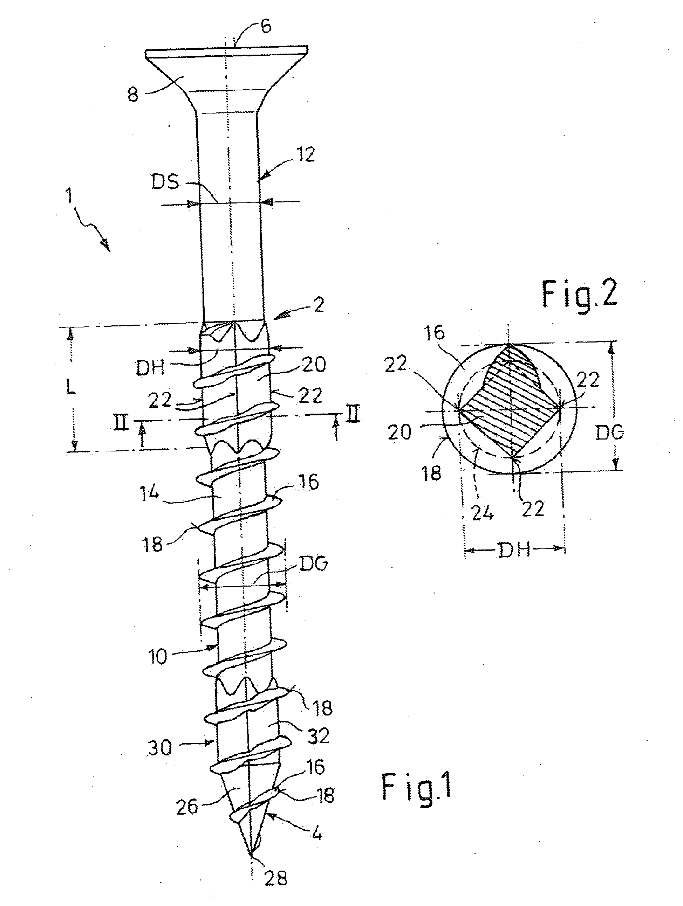

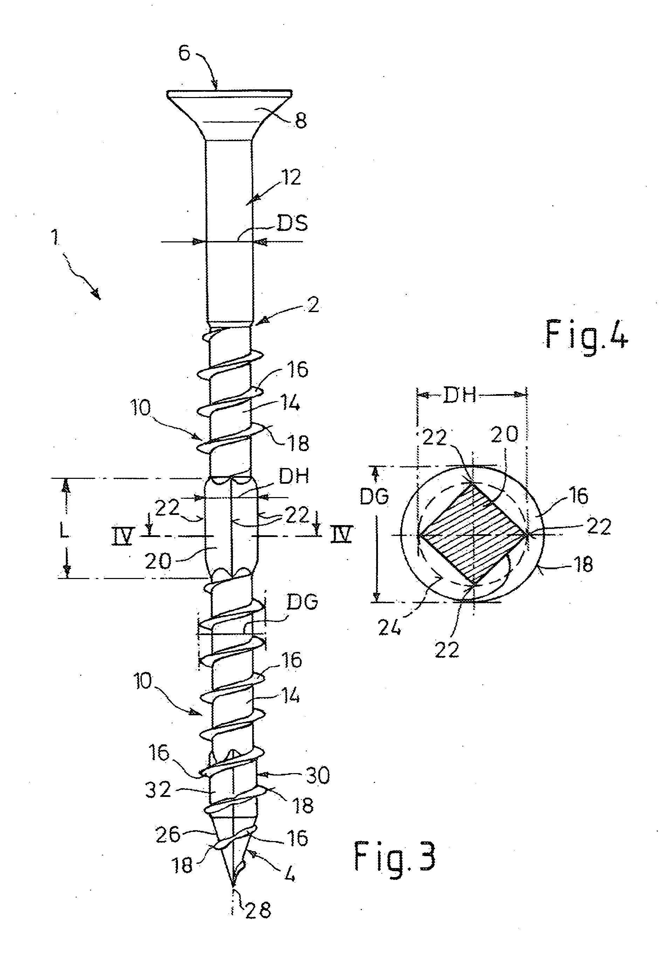

Erfindungsgemäß weißt der Gewindeabschnitt 10 in einem von der Schraubenspitze 4 entfernt liegenden Bereich einen Kernabschnitt 20 mit einem polygonalen Kernquerschnitt auf. Wie sich insbesondere aus den Querschnitten in Fig. 2 und 4 ergibt, definiert der polygonale Kernabschnitt 20 mit seinen Ecken 22 einen Hüllkreis 24 mit einem Hüllkreis-Durchmesser DH, der größer als der Schaft-Durchmesser DS des gewindefreien Schaftabschnittes 12, vorzugsweise aber kleiner als der Gewindedurchmesser DG ist. Bevorzugt sollte der Hüllkreis-Durchmesser DH das bis zu 1,4-fache, insbesondere das 1,1 bis 1,2-fache, des Schaft-Durchmessers DS betragen. Beispielsweise betragen bei einer 8mm-Schraube der Gewindedurchmesser DG 8mm und der Schaft-Durchmesser DS etwa 5,6mm. Dabei liegt erfindungsgemäß der Hüllkreis-Durchmesser DH etwa im Bereich von 6,2 mm bis 6,4mm.

Bei der ersten, in den Fig. 1 und 2 veranschaulichten Ausführungsform verläuft das Gewinde 16 über den gesamten Schaftkern 14 einschließlich des polygonalen Kernabschnittes 20. Dadurch kann der polygonale Kernabschnitt 20 vorzugsweise im schaftseitigen Endbereich des Gewindeabschnittes 10 (am Gewindeauslauf) in direkter Nachbarschaft zum gewindefreien Schaftabschnitt 12 angeordnet sein. Dennoch wird bei der Herstellung der Schraube 1 im Walz-Verfahren eine exakte Geradlinigkeit erzielt, indem auch der Bereich des polygonalen Kernabschnittes 20 über das durchlaufende Gewinde 16 zwischen zwei Walzbacken exakt geführt, praktisch eingespannt, ist. Das Gewinde 16 verläuft mit seiner äußeren Gewindekante 18 auch über den Bereich des polygonalen Kernabschnittes 20 hinweg - in axialer Projektion gesehen - mit konstantem Radius kreisförmig (vgl. Fig. 2). Abweichend von der in Fig. 1 gezeigten Ausführung kann der polygonale und mit Gewinde 16 versehene Kernabschnitt 20 auch weiter von dem gewindefreien Schaftabschnitt 12 entfernt im Gewindeabschnitt 10 angeordnet sein, wobei dann zwischen den Abschnitten 20 und 12 ein Teil des "normalen" Gewindes mit zylindrischem Schaftkern 14 vorgesehen ist.

In der alternativen Ausgestaltung gemäß Fig. 3 und 4 ist der polygonale Kernabschnitt 20 - das Gewinde 16 unterbrechend - gewindefrei ausgebildet. Hierbei ist zwischen dem polygonalen Kernabschnitt 20 und dem gewindefreien Schaftabschnitt 12 ein Endbereich des Gewindeabschnittes 10 mit vorzugsweise mindestens einem vollständigen Gewindegang vorgesehen. Gemäß Fig. 3 kann es sich auch um mindestens vier vollständige Gewindegänge handeln. Somit liegt axial beidseitig des polygonalen Kernabschnittes 20 ein Teil des Gewindeabschnittes 10, dass auch bei dieser Ausführung beim Gewindewalzen eine exakte Führung gegen Verzug/Verbiegung erreicht wird.

In beiden Ausführungen weist der polygonale Kernabschnitt 20 eine axiale Länge L auf, die etwa der Länge eines Teils des Gewindeabschnittes 10 mit einem bis sechs Gewindegängen entspricht.

Wie sich weiterhin aus Fig. 2 und 4 ergibt, ist der polygonale Kernquerschnitt des Kernabschnittes 20 bevorzugt als Vierkant (Viereck bzw. Quadrat) ausgebildet. Grundsätzlich kann es sich aber beliebig um ein vorzugsweise gleichseitiges Drei- bis Sechseck handeln. Dabei können die Seitenflächen in Abweichung von den Darstellungen schwach konkav oder konvex gewölbt sein. Die Ecken 22 sollten möglichst scharfkantig ausgeführt sein, können aber auch etwas verrundet sein.

In bevorzugter Ausgestaltung der Erfindung weist auch die Schraubenspitze 4 einen Kern 26 mit einem polygonalen Kernquerschnitt auf. Dabei verläuft das Gewinde 16 mit seiner äußeren Gewindekante 18 - in axialer Projektion gesehen - über den Bereich der sich verjüngenden Schraubenspitze 4 hinweg und bis zu einem spitzen Ende 28 mit kontinuierlich abnehmendem Radius spiralförmig über den Kern 26. Weiterhin ist bevorzugt im Anschluss an die Schraubenspitze 4 ein Übergangsabschnitt 30 vorgesehen, der einen Kern 32 mit einem über seine axiale Länge hinweg konstanten, ebenfalls polygonalen Kernquerschnitt aufweist. Dieser Kernquerschnitt entspricht insbesondere dem im direkt angrenzenden Bereich des Kerns 26 der Schraubenspitze 4 vorhandenen Kernquerschnitt. Das Gewinde 16 verläuft über den Bereich des Kerns 32 des Übergangsabschnittes 30 hinweg mit seiner äußeren Gewindekante 18 - wiederum in axialer Projektion gesehen - analog zu dem übrigen Gewindeabschnitt 10 mit konstantem Radius kreisförmig.

Bei den Kernquerschnitten des Kerns 26 der Schraubenspitze 4 und des Kerns 32 des Übergangsabschnittes 30 handelt es sich bevorzugt ebenfalls um ein Quadrat bzw. einen Vierkant oder um ein beliebiges, insbesondere gleichseitiges Drei- bis Sechseck. Der polygonale Kern 32 des Übergangsabschnittes 30 definiert mit seinen Ecken einen Hüllkreis, dessen Durchmesser einerseits größer als der Durchmesser des Schaftkerns 14, andererseits aber kleiner als der Hüllkreis-Durchmesser DH des erfindungsgemäßen Kernabschnittes 20 ist.

Durch die beschriebene bevorzugte Ausgestaltung im Bereich der Schraubenspitze 4 wirkt diese als Bohrspitze, die ein zentriertes und leichtes Einschrauben ermöglicht.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Selbstlochende und gewindeformende Schraube (1), mit einem Schraubenschaft (2) mit einer einendigen Schraubenspitze (4) und einem anderendigen Kraftangriff (6) zur Drehmomentübertragung, wobei der Schraubenschaft (2) aus einem die Schraubenspitze (4) aufweisenden Gewindeabschnitt (10) und einem sich anschließenden gewindefreien, den Kraftangriff (6) aufweisenden Schaftabschnitt (12) besteht, und wobei der Gewindeabschnitt (10) aus einem Schaftkern (14) und einem gewindeformenden Gewinde (16) besteht,
**dadurch gekennzeichnet, dass** derGewindeabschnitt (10) in einem von der Schraubenspitze (4) entfernt liegenden Bereich einen Kernabschnitt (20) mit einem polygonalen Kernquerschnitt aufweist, der mit seinen Ecken (22) einen Hüllkreis (24) mit einem Hüllkreis-Durchmesser (DH) definiert, der größer als der Schaft-Durchmesser (DS) des gewindefreien Schaftabschnittes (12) ist.

2. Schraube nach Anspruch 1,
**dadurch gekennzeichnet, dass** der Hüllkreis-Durchmesser (DH) des polygonalen Kernabschnittes (20) das bis zu 1,4-fache, insbesondere das 1,1 bis 1,2-fache, des Schaft-Durchmessers (DS) des gewindefreien Schaftabschnittes (12) beträgt.

3. Schraube nach Anspruch 1 oder 2,
**dadurch gekennzeichnet, dass** das Gewinde (16) über den gesamten Schaftkern (14) einschließlich des polygonalen Kernabschnittes (20) verläuft, wobei der polygonale Kernabschnitt (20) vorzugsweise im Endbereich des Gewindeabschnittes (10) in Nachbarschaft zum gewindefreien Schaftabschnitt (12) vorgesehen ist.

4. Schraube nach Anspruch 3,
**dadurch gekennzeichnet, dass** das Gewinde (16) mit einer äußeren Gewindekante (18) über den Bereich des polygonalen Kernabschnittes (20) hinweg - in axialer Projektion gesehen - mit konstantem Radius kreisförmig verläuft.

5. Schraube nach Anspruch 1 oder 2,
**dadurch gekennzeichnet, dass** der polygonale Kernabschnitt (20) das Gewinde (16) unterbrechend gewindefrei ausgebildet ist, wobei zwischen dem polygonalen Kernabschnitt (20) und dem gewindefreien Schaftabschnitt (12) ein Endbereich des Gewindeabschnittes (10) mit vorzugsweise mindestens einem vollständigen Gewindegang vorgesehen ist.

6. Schraube nach einem der Ansprüche 1 bis 5,
**dadurch gekennzeichnet, dass** die Schraubenspitze (4) einen Kern (26) mit einem polygonalen Kernquerschnitt aufweist, wobei das Gewinde (16) mit seiner äußeren Gewindekante (18) - in axialer Projektion gesehen - über den Bereich der sich verjüngenden Schraubenspitze (4) hinweg mit kontinuierlich abnehmendem Radius spiralförmig über den Kern (26) verläuft.

7. Schraube nach Anspruch 6,
**dadurch gekennzeichnet, dass** im Anschluss an die Schraubenspitze (4) ein Übergangsabschnitt (30) vorgesehen ist, der einen Kern (32) mit einem über seine axiale Länge hinweg konstanten polygonalen Kernquerschnitt aufweist, der insbesondere dem im direkt angrenzenden Bereich des Kerns (26) der Schraubenspitze (4) vorhandenen Kernquerschnitt entspricht, wobei das Gewinde (16) über den Bereich des Kerns (32) des Übergangsabschnittes (30) hinweg mit seiner äußeren Gewindekante (18) - in axialer Projektion gesehen - mit konstantem Radius kreisförmig verläuft.

8. Schraube nach einem der Ansprüche 1 bis 7,
**dadurch gekennzeichnet, dass** der polygonale Kernabschnitt (20) eine axiale Länge (L) aufweist, die etwa der Länge eines Teils des Gewindeabschnittes (10) mit einem bis sechs Gewindegängen entspricht.

9. Schraube nach einem der Ansprüche 1 bis 8,
**dadurch gekennzeichnet, dass** der polygonale Kernquerschnitt als vorzugsweise gleichseitiges Drei- bis Sechseck, insbesondere als Viereck, ausgebildet ist.

10. Schraube nach einem der Ansprüche 1 bis 9,
**dadurch gekennzeichnet, dass** der gewindefreie Schaftabschitt (12) in einen den Kraftangriff (6) aufweisenden Schraubenkopf (8), insbesondere Senkkopf, übergeht.

## Claims

1. Self-tapping and thread-forming screw (1) having at one end a screw shaft (2) with a screw tip (4) and at the other end a point of application of a force (6) for the transmission of a turning moment, the screw shaft (2) consisting of a threaded section (10) exhibiting the screw tip (4) and an adjacent thread-free section of the shaft (12) exhibiting the point of application of a force (6), the threaded section (10) consisting of a shaft core (14) and a thread-forming thread (16),
**characterized in that** the threaded section (10), in an area situated remotely from the screw tip (4), exhibits a core section (20) having a polygonal core cross section, which with its corners (22) defines an enveloping circle (24) with an enveloping circle diameter (DH), which is larger than the shaft diameter (DS) of the thread-free section of the shaft (12).

2. Screw according to Claim 1,
**characterized in that** the enveloping circle diameter (DH) of the polygonal core section (20) is up to 1.4 times, and in particular between 1.1 and 1.2 times the shaft diameter (DS) of the thread-free section (12) of the shaft.

3. Screw according to Claim 1 or 2,
**characterized in that** the thread (16) runs along the entire core (14) of the shaft including the polygonal core section (20), in conjunction with which the polygonal core section (20) is preferably provided in the end area of the threaded section (10) in the vicinity of the thread-free section (12) of the shaft.

4. Screw according to Claim 3,
**characterized in that** the thread (16) passes with an outer thread edge (18) over the area of the polygonal core section (20) - viewed in an axial projection - with a constant radius in the form of a circle.

5. Screw according to Claim 1 or 2,
**characterized in that** the polygonal core section (20) interrupting the thread (16) is of thread-free execution, in conjunction with which an end area of the threaded section (10), preferably having at least one complete turn of the thread, is provided between the polygonal core section (20) and the thread-free section (12) of the shaft.

6. Screw according to one of Claims 1 to 5,
**characterized in that** the screw tip (4) exhibits a core (26) with a polygonal core cross section, in conjunction with which the thread (16) passes with its outer thread edge (18) - viewed in an axial projection - over the area of the tapering screw tip (4) with a continuously reducing radius in the form of a spiral over the core (26).

7. Screw according to Claim 6,
**characterized in that**, provided in conjunction with the tip (4) of the screw, is a transitional section (30), which exhibits a core (32) with a constant polygonal core cross section over its axial length, which corresponds in particular to the core cross section that is present in the directly adjacent area of the core (26) of the tip (4) of the screw, in conjunction with which the thread (16) passes over the area of the core (32) of the transitional section (30) with its outer thread edge (18) - viewed in an axial projection - with a constant radius in the form of a circle.

8. Screw according to one of Claims 1 to 7,
**characterized in that** the polygonal core section (20) exhibits an axial length (L), which corresponds more or less to the length of a part of the threaded section (10) having between one and six turns of the thread.

9. Screw according to one of Claims 1 to 8,
**characterized in that** the polygonal core cross section is embodied preferably as an equilateral, three-sided to six-sided figure, and in particular as a four-sided figure.

10. Screw according to one of Claims 1 to 9,
**characterized in that** the thread-free section of the shaft (12) translates into a screw head (8), in particular a countersunk head, exhibiting the point of application of a force.

## Revendications

1. Vis (1) autoperceuse et autotaraudeuse, comportant une tige (2) avec une pointe (4) à une extrémité et une partie d'application de force (6) à l'autre extrémité pour la transmission d'un couple de rotation, ladite tige (2) étant formée par une partie filetée (10) munie de la pointe de vis (4), et une partie non filetée (12) adjacente, munie de la partie d'application de force (6), et ladite partie filetée (10) étant formée par une âme (14) et un filet (16) taraudeur,
**caractérisée en ce que** la partie filetée (10), dans une zone écartée de la pointe de vis (4), comporte un tronçon d'âme (20) avec une section polygonale, dont les angles (22) définissent une enveloppante (24) avec un diamètre (DH), qui est supérieur au diamètre (DS) de la partie non filetée (12) de la tige.

2. Vis selon la revendication 1,
**caractérisée en ce que** le diamètre d'enveloppante (DH) du tronçon d'âme (20) polygonal est de l'ordre de 1,4 fois, en particulier 1,1 à 1,2 fois le diamètre (DS) de la partie non filetée (12) de la tige.

3. Vis selon la revendication 1 ou 2,
**caractérisée en ce que** le filet (16) s'étend sur la totalité de l'âme (14), y compris le tronçon d'âme (20) polygonal, ledit tronçon d'âme (20) polygonal étant prévu de préférence dans la zone d'extrémité de la partie filetée (10) au voisinage de la partie non filetée (12) de la tige.

4. Vis selon la revendication 3,
**caractérisée en ce que** le filet (16) s'étend avec une arête (18) extérieure - par référence à une projection axiale - sur toute la zone du tronçon d'âme (20) polygonal en formant un cercle à rayon constant.

5. Vis selon la revendication 1 ou 2,
**caractérisée en ce que** le tronçon d'âme (20) polygonal est réalisé sans filetage et interrompt le filet (16), sachant qu'entre le tronçon d'âme (20) polygonal et la partie non filetée (12) de la tige, il est prévu une zone d'extrémité de la partie filetée (10) avec, de préférence, au moins un pas de vis complet.

6. Vis selon l'une quelconque des revendications 1 à 5,
**caractérisée en ce que** la pointe de vis (4) comporte une âme (26) avec une section polygonale, le filet (16) avec son arête (18) extérieure - par référence à une projection axiale - s'étendant sur l'âme (26), sur toute la zone de pointe de vis (4) se rétrécissant, en formant une spirale avec un rayon diminuant en continu.

7. Vis selon la revendication 6,
**caractérisée en ce que** dans le prolongement de la pointe de vis (4) est prévue une partie de transition (30), qui comporte une âme (32) avec une section polygonale constante sur toute sa longueur axiale, qui correspond en particulier à la section de l'âme directement adjacente à la zone de l'âme (26) de la pointe de vis (4), le filet (16) s'étendant sur toute la zone de l'âme (32) de la partie de transition (30) avec son arête (18) extérieure - par référence à une projection axiale - en formant un cercle à rayon constant.

8. Vis selon l'une quelconque des revendications 1 à 7,
**caractérisée en ce que** le tronçon d'âme (20) polygonal a une longueur axiale (L) qui correspond à peu près à la longueur d'une partie de la partie filetée (10) avec un à six pas de vis.

9. Vis selon l'une quelconque des revendications 1 à 8,
**caractérisée en ce que** la section polygonale est réalisée de préférence sous la forme d'un triangle équilatéral jusqu'à un hexagone, en particulier sous la forme d'un carré.

10. Vis selon l'une quelconque des revendications 1 à 9,
**caractérisée en ce que** la partie non filetée (12) de la tige est prolongée par une tête de vis (8), en particulier une tête conique, munie de la partie d'application de force (6).
